# EUROPÄISCHE PATENTSCHRIFT

(11) **EP 0 813 458 B1**
(45) Veröffentlichungstag und Bekanntmachung des Hinweises auf die Patenterteilung: **08.05.2002**
(21) Anmeldenummer: 96902863.8
(22) Anmeldetag: 12.02.1996
(51) Int. Cl.: B23B 29/034, B23B 5/40, B23C 3/05

(54) **POSITIONIERANTRIEB, INSBESONDERE FÜR DEN EINSATZ IN MASCHINENWERKZEUGEN SOWIE WERKZEUGKOPF MIT EINEM SOLCHEN POSITIONIERANTRIEB**
POSITIONING DRIVE FOR USE, IN PARTICULAR, IN MACHINE TOOLS, AND TOOL HEAD WITH SUCH A POSITIONING DRIVE
COMMANDE DE POSITIONNEMENT, NOTAMMENT SUR MACHINES-OUTILS, ET TETE PORTE-OUTIL UTILISEE AVEC UNE TELLE COMMANDE

(30) Priorität: 03.03.1995 DE 19507471
(43) Veröffentlichungstag der Anmeldung: 29.12.1997
(60) Teilanmeldung: 01118947.9
(73) Patentinhaber: KOMET Präzisionswerkzeuge Robert Breuning GmbH, D-74354 Besigheim (DE)
(72) Erfinder: SCHEER, Gerhard, D-74369 Löchgau (DE)
(74) Vertreter: Wolf, Eckhard, Dr.-Ing.
(86) Internationale Anmeldenummer: DE9600237
(87) Internationale Veröffentlichungsnummer: WO9627468

(56) Entgegenhaltungen:
- DE-A- 2 728 975
- DE-A- 4 100 330
- DE-C- 60 081
- GB-A- 926 536
- US-A- 1 710 462
- US-A- 3 157 068
- US-A- 5 044 841

## Beschreibung

Die Erfindung betrifft einen Positionierantrieb und einen Werkzeugkopf mit einem Positionierantrieb, insbesondere für den Einsatz in Maschinenwerkzeugen, mit mindestens einem relativ zu einem Grundkörper bewegbaren Getriebeglied, insbesondere zur Verstellung eines Schneidenträgers oder eines Schneidwerkzeugs, mit einer im Grundkörper angeordneten, mit dem Getriebeglied kuppelbaren elektrischen Motoranordnung und mit einer Stromversorgungseinrichtung für die Motoranordnung, wobei im Grundkörper eine durch die Motoranordnung antreibbare, mit dem Getriebeglied gekuppelte Welle drehbar und axial unverschiebbar gelagert ist, und wobei das Getriebeglied als parallel zur Wellenachse relativ zum Grundkörper verschiebbares Schubglied ausgebildet ist.

Bei einem bekannten Positionierantrieb dieser Art (GB-A-926536) ist die in einem Gehäuse verschiebefest gelagerte Welle als Gewindespindel ausgebildet, während das Schubglied als mit einem Innengewinde auf der Gewindespindel geführter, die Schneide tragender Schlitten ausgebildet ist.

Ausgehend hiervon liegt der Erfindung die Aufgabe zugrunde, den bekannten Positionierantrieb dahingehend zu verbessern, daß eine kompaktere und dennoch leistungsfähige Antriebseinheit zur Verfügung steht.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, daß die Welle als Hohlwelle ausgebildet ist und daß die Hohlwelle um eine zur Verschiebeachse des Schubglieds konzentrische Drehachse im Grundkörper drehbar gelagert ist und ein in ein Außengewinde des Schubglieds eingreifendes Innengewinde aufweist.

Eine vorteilhafte Ausgestaltung der Erfindung sieht vor, daß die Hohlwelle einen zum Außengewinde konzentrischen Zahnkranz für den Eingriff mindestens eines auf einer Abtriebswelle der Motoranordnung angeordneten Zahnrads aufweist. Zur Erhöhung der Motorleistung weist die Motoranordnung zweckmäßig mehrere, über den Umfang der Hohlwelle verteilt angeordnete Elektromotoren auf, deren Abtriebswellen je ein mit dem Zahnkranz der Hohlwelle kämmendes Zahnrad tragen und die gemeinsam über die Steuerelektronik ansteuerbar sind. Die Elektromotoren sind dabei mit zur Hohlwellenachse parallelen Abtriebswellen in gleichen Umfangsabständen in einem grundkörperfesten Motorblock angeordnet. Sie sind beispielsweise als Schrittmotoren oder als Servomotoren ausgebildet, die über eine gemeinsame NC-Steuerung ansteuerbar sind.

Zwischen der Hohlwelle und einem grundkörperfesten Bauteil, beispielsweise dem Motorblock, ist zweckmäßig ein Sensor zur Drehzahl- und Drehrichtungsüberwachung der Hohlwelle angeordnet, der vorzugsweise als Inkrementalgeber ausgebildet ist. Statt des Sensors kann zur Drehzahl- und Drehrichtungsüberwachung einer der Elektromotoren mit einem Encoder bestückt werden.

Um eine optimale Kraftübertragung zwischen den Elektromotoren und der Hohlwelle bei möglichst kompakter Bauweise zu gewährleisten, ist der Zahnkranz der Hohlwelle als Innenzahnkranz ausgebildet, dessen Innendurchmesser zweckmäßig größer als der des Innengewindes ist.

Bei einem bevorzugten Anwendungsfall des erfindungsgemäßen Positionierantriebs ist am Grundkörper ein Wechselschneidkopf lösbar angeordnet, der eine stirnseitige Zentralöffnung und/oder eine Führungsbüchse für den Durchtritt eines mit dem Schubglied verbindbaren Reib- oder Bohrwerkzeugs aufweist. Zu diesem Zweck trägt das Schubglied ein stirnseitiges, innerhalb des Grundkörpers angeordnetes Kupplungselement zur Aufnahme eines durch die stirnseitige Zentralöffnung des Grundkörpers hindurchgreifenden und in einen Hohlraum des Grundkörpers und/oder des Wechselschneidkopfs zumindest teilweise einziehbaren Reib- oder Bohrwerkzeugs. Das Kupplungselement ist dabei zweckmäßig als Spannzangenpinole ausgebildet.

Eine bevorzugte Ausgestaltung der Erfindung sieht vor, daß das Kupplungselement ein Innengewinde zur Aufnahme des ein komplementäres Außengewinde tragenden Werkzeugschafts aufweist. Das Kupplungselement ist zweckmäßig mit Spiel in einem am Schubglied angeformten Kopfstück dreh- und verschiebefest gelagert und weist bevorzugt eine im Umriß mehrkantige Mitnehmerpartie und zwei an die Mitnehmerpartie nach entgegengesetzten Seiten überstehende Kugelkalotten auf. Aufgrund seiner Spielfreiheitsgrade sorgt es dafür, daß auf das Werkzeug keine Zwangskräfte wirken.

In das Kupplungselement kann eine Reibahle zum Bearbeiten einer Stößelführungsbüchse eines Zylinderkopfs eingespannt oder eingeschraubt werden, während der Wechselschneidkopf eine vorzugsweise winkelverstellbare Schneidplatte zum Stirnen eines zur Stößelführungsbüchse koaxialen Ventilsitzrings trägt. Der Wechselschneidkopf kann zusätzlich mindestens eine weitere Schneide zur Erzeugung einer den Ventilsitz begrenzenden Außen- und/oder Innenfase tragen.

Eine weitere bevorzugte Anwendungsmöglichkeit der Erfindung sieht einen um eine quer zur Verschieberichtung des Schubglieds ausgerichtete Achse drehbar am Grundkörper gelagerten Schneidenträger und die Schubbewegung des Schubglieds in eine Drehbewegung des Schneidenträgers umsetzende Getriebemittel vor, wobei der Schneidenträger, das Schubglied und die Getriebemittel in ihrer Gesamtheit eine Schubkurbel bilden können. Der Werkzeugkopf kann in diesem Fall als Kugeldrehkopf eingesetzt werden, bei welchem der Schneidenträger mindestens eine mit einer Schneide zum Kugeldrehen versehene Schneidplatte trägt.

Um den Positionierantrieb in einen Plan- oder Schrägschieberkopf einsetzen zu können, sind zwei quer oder schräg zur Verschieberichtung des Schubglieds am Grundkörper gegensinnig verschiebbare Schieber vorgesehen, von denen mindestens einer eine Werkzeugaufnahme aufweist. Weiter sind Getriebemittel zur Umsetzung der Schubbewegung des Schubglieds in die Verschiebebewegungen der Schieber vorgesehen. Die Getriebemittel können dabei durch paarweise ineinandergreifende schubgliedfeste und schieberfeste Schrägverzahnungen ausgebildet sein.

Die Stromversorgungseinrichtung für die Elektromotoren und die Meß- und Steuerungselektronik weist vorteilhafterweise eine induktive Strom- und Datenübertragungsstrecke mit einer in einem maschinenseitigen Spulengehäuse angeordneten Primärspule und einer in einem werkzeugkopfseitigen, den Werkzeugschaft ringförmig umgreifenden Spulengehäuse angeordneten Sekundärspule auf, wobei die Spulengehäuse bei mit der Maschinenspindel gekuppeltem Werkzeugschaft durch einen Luftspalt voneinander getrennt sind. Im maschinenseitigen und/oder werkzeugkopfseitigen Spulengehäuse ist zweckmäßig eine mit der Primär- bzw. Sekundärspule verbundene Primär- oder Sekundärelektronik zur Stromaufbereitung und/oder -stabilisierung angeordnet.

Im folgenden wird die Erfindung anhand einiger in der Zeichnung in schematischer Weise dargestellter Ausführungsbeispiele näher erläutert. Es zeigen
- Fig. 1: einen Axialschnitt durch einen zur Fertigbearbeitung von Ventilsitzringen und Stößelführungsbüchsen in Zylinderköpfen bestimmten Werkzeugkopf;
- Fig. 2: einen Schnitt durch den Positionierantrieb des Werkzeugkopfs nach Fig. 1 in vergrößerter Darstellung;
- Fig. 3: eine Draufsicht auf den Positionierantrieb nach Fig. 2;
- Fig. 4a und b: das Schubglied mit Spannzangenpinole in einer teilweise geschnittenen Seitenansicht und einer Draufsicht;
- Fig. 5a und b: das Schubglied mit einem ein Innengewinde aufweisenden Kupplungselement in teilweise geschnittener Seitenansicht und einer Draufsicht;
- Fig. 6: einen als Kugeldrehkopf ausgebildeten Werkzeugkopf in einer teilweise geschnittenen Seitenansicht;
- Fig. 7: einen als Plandrehkopf ausgebildeten Werkzeugkopf in einer teilweise geschnittenen Seitenansicht.

Die in der Zeichnung dargestellten Werkzeugköpfe 10 bestehen im wesentlichen aus einem Grundkörper 12, einem axial über den Grundkörper 12 überstehenden, mit einer motorisch antreibbaren, rotierenden Maschinenspindel 14 einer Werkzeugmaschine kuppelbaren Werkzeugschaft 16, einem achszentral im Grundkörper 12 angeordneten, axial verschiebbaren Schubglied 18 zur Verstellung mindestens eines Schneidenträgers oder Schneidwerkzeugs, einer im Grundkörper 12 angeordneten, mit dem Schubglied 18 kuppelbaren elektrischen Motoranordnung 24 und mit einer Stromversorgungseinrichtung 26 für die Motoranordnung 24 und eine im Grundkörper angeordnete Meß- und Steuerelektronik 28.

Die Stromversorgungseinrichtung 26 besteht aus einem Spulengehäuse 30, in welchem sich eine in einer mechanisch belastbaren Masse aus Kunststoff oder Kunstharz eingebettete Sekundärspule 32 mit zugehöriger Stabilisierungselektronik befindet, die Bestandteil einer induktiven Übertragungsstrecke ist. Die Primärspule der induktiven Übertragungsstrecke ist zusammen mit der zugehörigen Stromaufbereitungselektronik in einem maschinenseitigen Gehäuse 34 angeordnet, das radial außerhalb des Werkzeugschafts 16 in den freien axialen Zwischenraum zwischen der Stirnfläche der Maschinenspindel 14 und der freien Stirnfläche des werkzeugkopfseitigen Spulengehäuses 30 eingreift. Die primärseitige Elektronik ist über ein Stromkabel 36 mit einem nicht dargestellten Netzteil verbunden. Das maschinenseitige Spulengehäuse 34 erstreckt sich segmentartig nur über einen Teilumfang von etwa 70° des Werkzeugschaftes 16 und läßt den überwiegenden Teil des Schaftumfangs unter Bildung eines Freiraums 38 für den Zugriff eines Werkzeuggreifers für den automatischen Werkzeugwechsel frei. Beim Werkzeugwechsel wird der Werkzeugkopf 10 an der Greiferrille 40 erfaßt und bei gelöster Werkzeugkupplung axial gegenüber der Maschinenspindel 14 verschoben.

Das Schubglied 18 weist einen mit einem Außengewinde 42 versehenen Gewindekörper 44 auf, der mit einem axial in Richtung Werkzeugschaft 16 überstehenden Führungszapfen 46 in einer grundkörperfesten Schubführung 48 verdrehungssicher axial geführt ist. Für den Antrieb des Schubglieds ist im Grundkörper 12 eine Hohlwelle 50 um eine zur Verschiebeachse 52 des Schubglieds 18 konzentrische Drehachse drehbar im Grundkörper 12 gelagert, die ein in das Außengewinde 42 des Gewindekörpers 44 eingreifendes komplementäres Innengewinde 54 aufweist. Die Hohlwelle 50 ist in einem grundkörperfesten Motorblock 56 in axialen und radialen Gleitlagern 58 drehbar und verschiebefest gelagert und weist an ihrem einen stirnseitigen Ende einen Ringflansch 60 mit einem auf der Seite des Motorblocks 56 radial außerhalb des Innengewindes 54 angeordneten Innenzahnrad 62 auf. Der das Innenzahnrad 62 bildende Zahnkranz ist mittels Schrauben 64 am Ringflansch 60 befestigt.

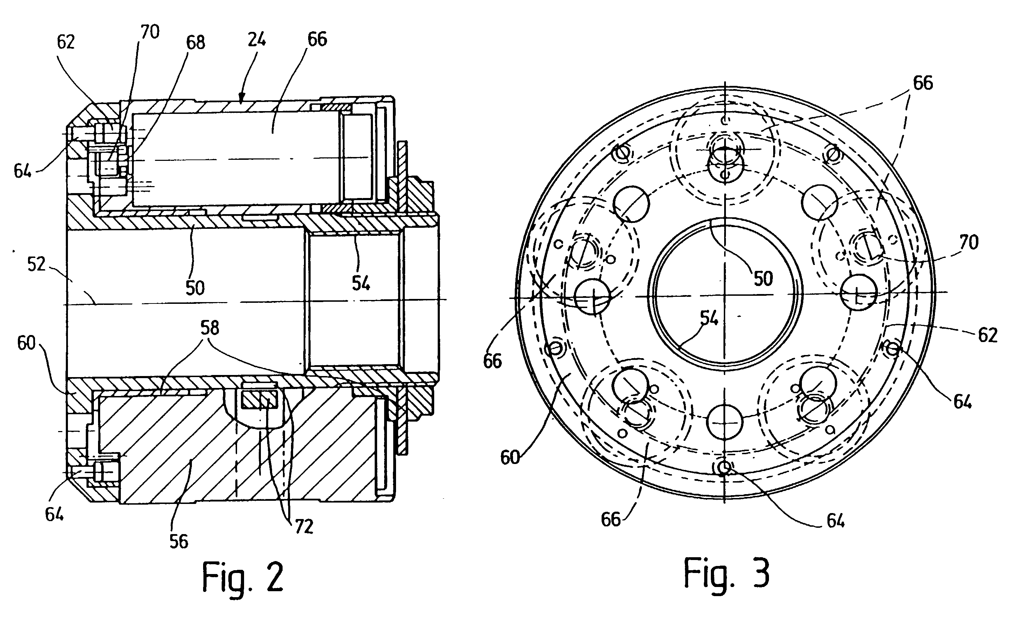

In dem Motorblock 56 sind mehrere, bei dem in Fig. 3 gezeigten Ausführungsbeispiel fünf numerisch ansteuerbare, vorzugsweise als Schrittmotoren ausgebildete Elektromotoren 66 in achsparalleler Ausrichtung so angeordnet, daß ihre auf der jeweiligen Abtriebswelle 68 angeordneten Zahnräder 70 gemeinsam mit dem hohlwellenfesten Innenzahnrad 62 kämmen. Die Ansteuerung der einzelnen Schrittmotoren erfolgt NC-gesteuert über die induktive Übertragungsstrecke 32,34. Zur Drehzahlund Drehrichtungsüberwachung ist ein als Inkrementalgeber ausgebildeter Sensor 72 im Bereich zwischen Motorblock 56 und Hohlwelle 50 angeordnet. Alternativ dazu kann zur Drehzahl- und Drehrichtungsüberwachung ein mit einem der Motoren 66 verbundener Encoder 72' vorgesehen werden.

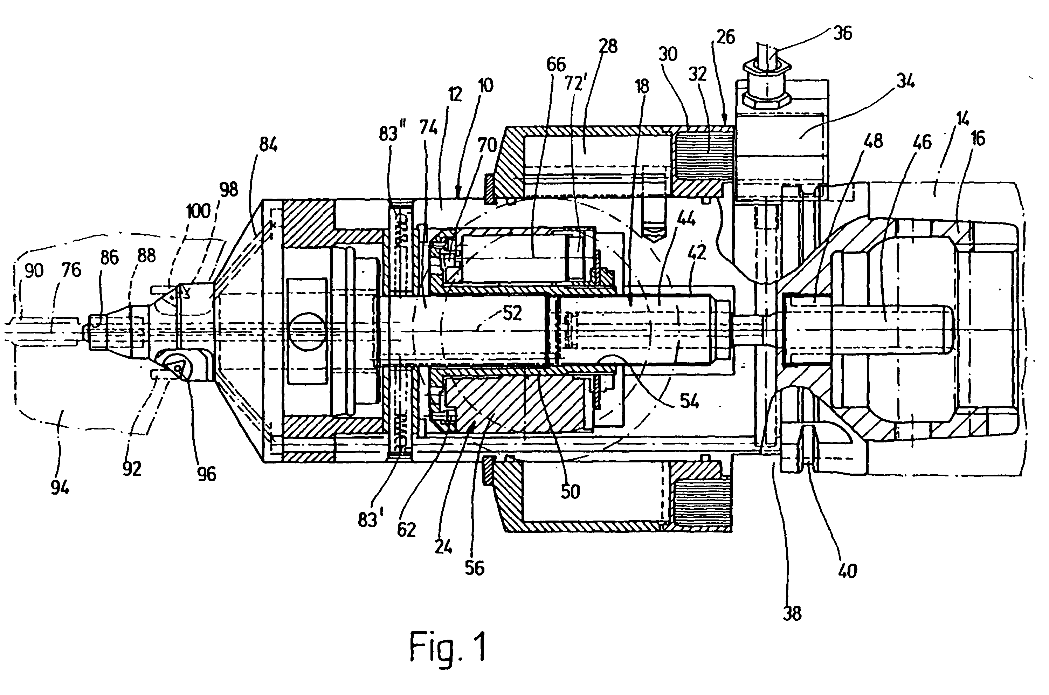

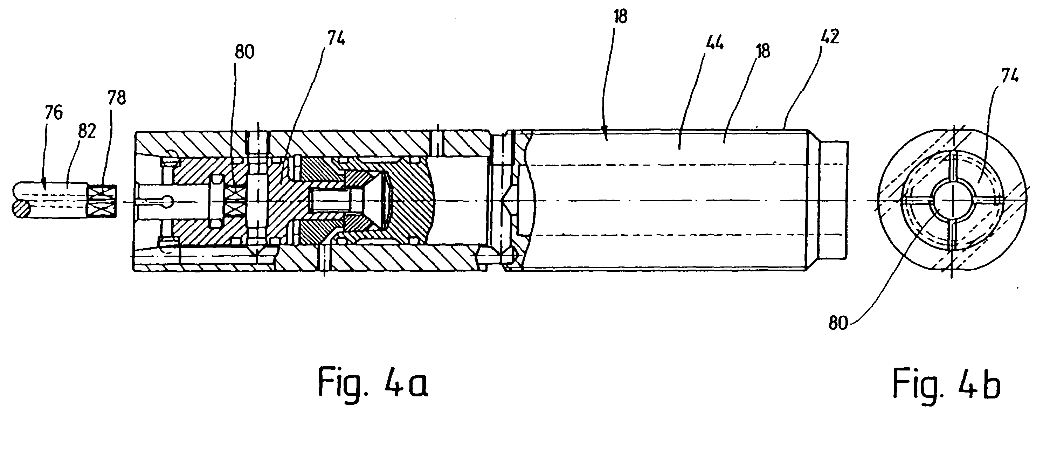

Bei dem in Fig. 1, 4a und b gezeigten Ausführungsbeispiel ist der Werkzeugkopf für die Fertigbearbeitung von Ventilsitzringen 92 und Stößelführungsbuchsen 90 eines Zylinderkopfs 94 bestimmt. Das Schubglied 18 ist zu diesem Zweck starr mit einem stirnseitig innerhalb des Grundkörpers 12 angeordneten, als Spannzangenpinole ausgebildeten Spannfutter 74 verbunden, das zur Aufnahme einer Reibahle 76 bestimmt ist. Wie insbesondere aus Fig. 4a und b zu ersehen ist, wird die Reibahle 76 in das Spannfutter 74 eingeführt und wird dort mit ihrer Schlüsselfläche 78 in der Mehrkantaufnahme 80 drehfest gehalten und an ihrem Schaft 82 eingespannt. Das Einspannen und Lösen erfolgt zweckmäßig von außen her mit einem mechanisch betätigten Spanner oder je einem luftbetätigten Impulsspanner 83',83''.

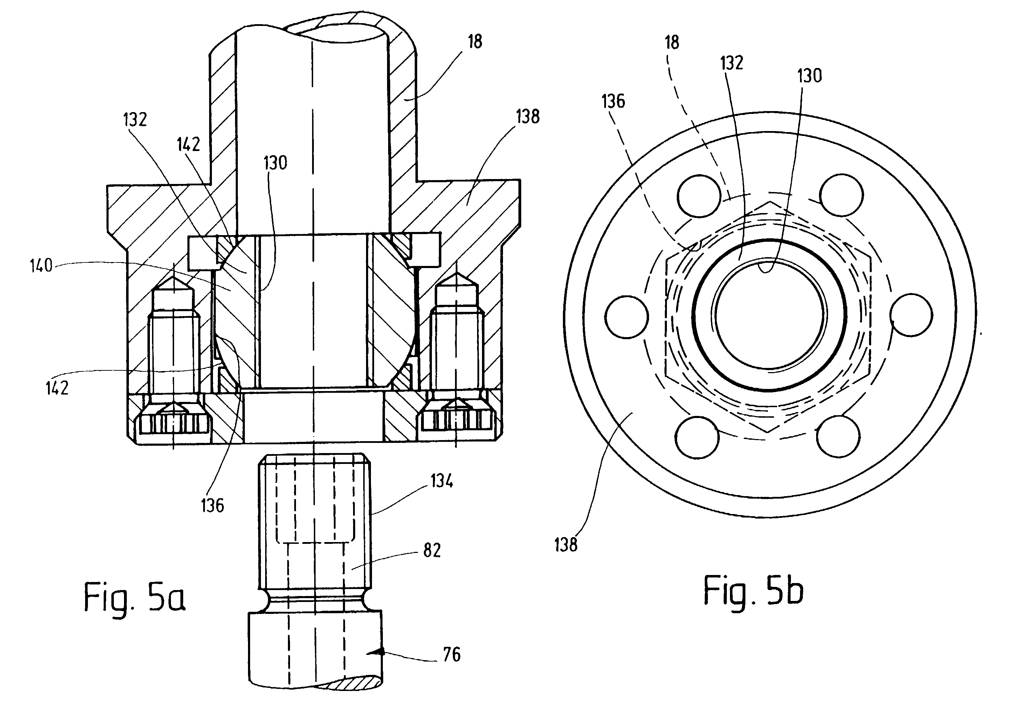

Das in Fig. 5a und b gezeigte Ausfuhrungsbeispiel unterscheidet sich von dem Ausführungsbeispiel nach Fig. 4a und b dadurch, daß statt des Spannfutters 74 ein mit einem Innengewinde 130 versehenes Kupplungselement 132 vorgesehen ist, in dessen Innengewinde 130 die Reibahle 76 mit ihrem ein komplementäres Außengewinde 134 tragenden Schaft 82 eindrehbar ist. Das Kupplungselement 132 ist dreh- und verschiebefest in eine Aufnahme 136 eines an dem Schubglied 18 angeformten, verbreiterten Kopfstücks 138 angeordnet. Das Kupplungselement weist zu diesem Zweck eine im Umriß sechskantige Mitnehmerpartie 140 und zwei an die Mitnehmerpartie nach entgegengesetzten Seiten anschließende Kugel-kalotten 142 auf, während die Aufnahme 136 im Schubglied 18 eine zum Kupplungselement 132 komplementäre Innenkontur aufweist. Durch die schwimmende Lagerung des Kupplungselements 132 in der Aufnahme 136 wird erreicht, daß auf die Reibahle 76 beim Bearbeitungsvorgang keine unzulässigen Zwangskräfte ausgeübt werden.

Zusätzlich trägt der in Fig. 1 gezeigte Werkzeugkopf einen stirnseitig am Grundkörper 12 lösbar angeordneten Wechselschneidkopf 84, der eine stirnseitige Zentralöffnung 86 und eine Führungsbüchse 88 für den Durchtritt der mit dem Spannfutter 74 verbundenen Reibahle 76 aufweist. Die Reibahle ist zur Bearbeitung einer in Fig. 1 strichpunktiert angedeuteten Stößelführungsbüchse 90 eines Zylinderkopfs 94 bestimmt. Zum Stirnen des Ventilsitzrings 92 des Zylinderkopfs 94 ist am Wechselschneidkopf 84 eine winkelverstellbare Schneidplatte 96 vorgesehen. Außerdem trägt der Wechselschneidkopf 84 zwei weitere Schneidplatten 98,100 zur Erzeugung einer den Ventilsitz begrenzenden Außen- und Innenfase. Die Stößelführungsbüchse wird dabei durch die in dem Spannfutter 74 eingespannte und mit dem Schubglied 18 axial verschiebbare Reibahle 76 ausgerieben, nachdem zuvor in der gleichen Einspannung des Werkzeugs 10 der Ventilsitz im Ventilsitzring 92 und die Schutzfasen des Ventilsitzes feingedreht worden sind. Die Reihenfolge der Bearbeitung kann auch umgekehrt werden. Wichtig ist nur, daß während der Reibahlenbearbeitung die Schneiden keinen Kontakt mit dem Ventilsitz haben und daß während der Bearbeitung des Ventilsitzes die Reibahle nicht in die Stößelführungsbüchse eingreift.

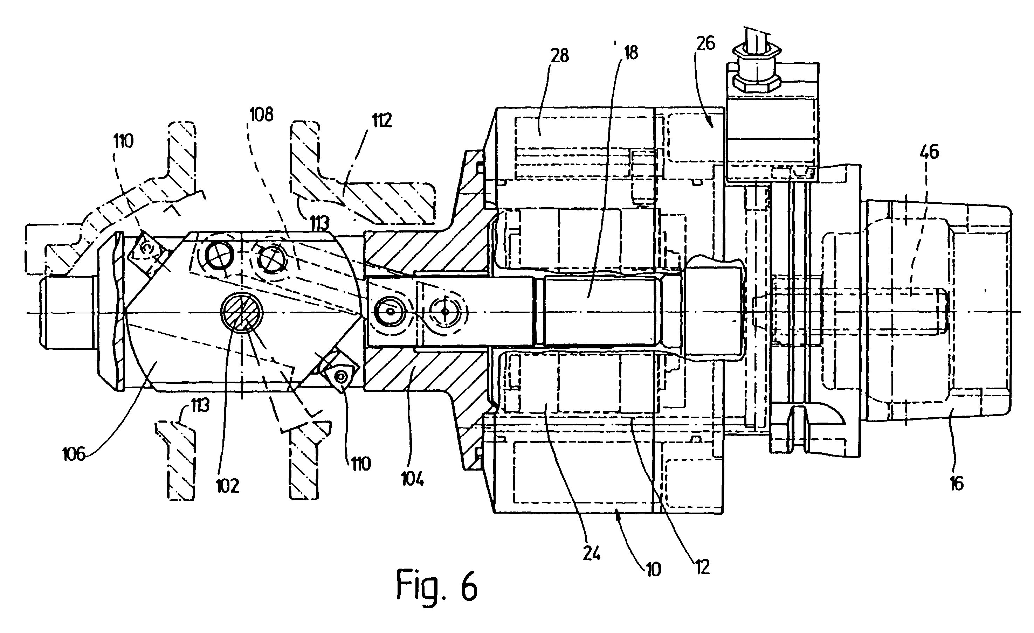

Der in Fig. 6 gezeigte Werkzeugkopf 10 ist als Kugeldrehkopf ausgebildet. Er weist zu diesem Zweck einen um eine zur Verschiebeachse 52 des Schubglieds 18 quer ausgerichtete Drehachse 102 drehbar an einem Grundkörperaufsatz 104 gelagerten Schneidenträger 106 auf, der über das Schubglied 18 und die Kurbelstange 108 in Drehung versetzt werden kann. Der Schneidenträger 106 trägt zwei einander diametral gegenüberliegende, mit Schneiden zum Kugeldrehen versehene Schneidplatten 110, mit denen in das Werkstück 112 konzentrische Kugelkalotten 113 eingedreht werden können.

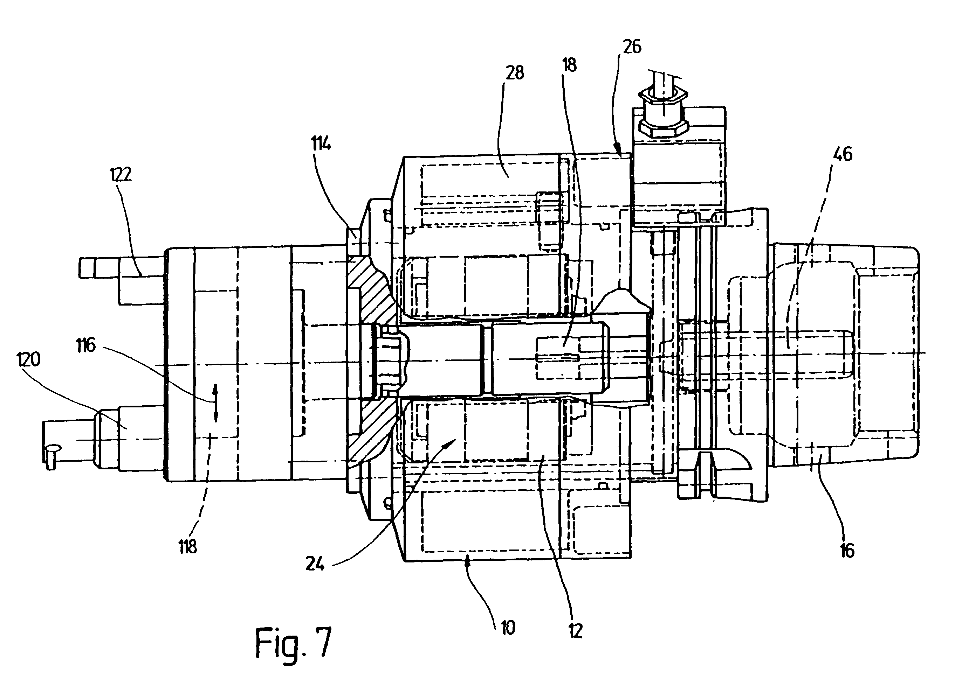

Bei dem in Fig. 7 gezeigten Ausführungsbeispiel ist der Werkzeugkopf 10 als Plandrehkopf ausgebildet. Er weist zu diesem Zweck einen Aufsatz 114 mit zwei quer zur Verschieberichtung 52 des Schubglieds 18 in Richtung des Doppelpfeils 116 gegensinnig verschiebbaren Schiebern 118 auf, von denen einer einen Schneidenhalter 120 und der andere zu Auswuchtzwecken ein Gegengewicht 122 trägt. Zwischen dem Schubglied 18 und den Schiebern 118 sind nicht dargestellte Getriebemittel angeordnet, die die Schubbewegung des Schubglieds in die Verschiebebewegungen der Schieber umsetzen. Diese Getriebemittel können beispielsweise durch paarweise ineinandergreifende schubgliedfeste und schieberfeste Schragverzahnungen gebildet sein, wie sie beispielsweise in der DE-OS 27 28 975 dargestellt und beschrieben sind.

Ein wesentlicher Vorteil der vorstehend beschriebenen Positionierantriebe besteht darin, daß sie mit einer leistungsfähigen Motoranordnung 24 bestückt sind, die maschinenseitig angeordnete Betätigungseinrichtungen entbehrlich macht und daher einen automatischen Werkzeugwechsel und einen Einsatz in Bearbeitungsmaschinen mit rotierender Maschinenspindel ermöglicht.

Zusammenfassend ist folgendes festzustellen: Die Erfindung bezieht sich auf einen Positionierantrieb für einen Werkzeugkopf für den Einsatz in Werkzeugmaschinen. Der Werkzeugkopf weist einen Grundkörper 12, einen axial über den Grundkörper 12 überstehenden, mit einer rotierenden Maschinenspindel 14 kuppelbaren Werkzeugschaft 16 und ein relativ zum Grundkörper 12 verschiebbares Schubglied 18 zur Verstellung mindestens eines Schneidenträgers oder Schneidwerkzeugs auf. Weiter ist im Grundkörper eine mit dem Schubglied 18 kuppelbare elektrische Motoranordnung 24 sowie eine Stromversorgungseinrichtung 26 für die Motoranordnung und eine im Grundkörper angeordnete Meß- und Steuerelektronik 28 angeordnet. Um eine kompakte Bauweise mit leistungsfähiger Motoranordnung zu gewährleisten, ist eine im Grundkörper 12 um eine zur Verschiebeachse 52 des Schubglieds 18 konzentrische Drehachse drehbar gelagerte, durch die Motoranordnung antreibbare Hohlwelle 50 vorgesehen, die ein in ein Außengewinde 42 des Schubglieds 18 eingreifendes Innengewinde sowie einen zum Außengewinde 42 konzentrischen Zahnkranz 62 für den Eingriff mindestens eines auf einer Abtriebswelle 68 der Motoranordnung angeordneten Zahnrads 70 aufweist.

## Patentansprüche

1. Positionierantrieb, insbesondere für den Einsatz in Maschinenwerkzeugen, mit mindestens einem relativ zu einem Grundkörper (12) bewegbaren Getriebeglied (18), insbesondere zur Verstellung eines Schneidwerkzeugs (76,106,118) oder eines Schneidenträgers, mit einer im Grundkörper (12) angeordneten, mit dem Getriebeglied (18) kuppelbaren elektrischen Motoranordnung (24) und mit einer Stromversorgungseinrichtung (26) für die Motoranordnung (24), wobei im Grundkörper (12) eine durch die Motoranordnung (24) antreibbare, mit dem Getriebeglied (18) gekuppelte Welle (50) drehbar und axial unverschiebbar gelagert ist, und wobei das Getriebeglied (18) als parallel zur Wellenachse relativ zum Grundkörper verschiebbares Schubglied (18) ausgebildet ist, **dadurch gekennzeichnet, daß** die Welle als Hohlwelle (50) ausgebildet ist, und daß die Hohlwelle (50) um eine zur Verschiebeachse (52) des Schubglieds (18) konzentrische Drehachse im Grundkörper (12) drehbar gelagert ist und ein in ein Außengewinde (42) des Schubglieds (18) eingreifendes Innengewinde aufweist.

2. Positionierantrieb nach Anspruch 1, **dadurch gekennzeichnet, daß** die Motoranordnung (24) mindestens zwei über den Umfang der Hohlwelle (50) verteilt angeordnete Elektromotoren (66) aufweist, deren Antriebswellen je ein mit einem Zahnkranz (62) der Hohlwelle (50) kämmendes Zahnrad (70) tragen.

3. Positionierantrieb nach Anspruch 1 oder 2, **dadurch gekennzeichnet, daß** die Hohlwelle (50) einen zum Außengewinde (42) konzentrischen Zahnkranz (62) für den Eingriff mindestens eines auf einer Abtriebswelle (68) der Motoranordnung (24) angeordneten Zahnrads (70) aufweist.

4. Positionierantrieb nach Anspruch 2, **dadurch gekennzeichnet, daß** die vorzugsweise als Getriebemotoren ausgebildeten Elektromotoren (66) gemeinsam, vorzugsweise über eine NC-Steuerung ansteuerbar sind.

5. Positionierantrieb nach Anspruch 4, **dadurch gekennzeichnet, daß** die Elektromotoren (66) als Schrittmotoren oder als Servomotoren ausgebildet sind.

6. Positionierantrieb nach einem der Ansprüche 2 bis 5, **dadurch gekennzeichnet, daß** der Zahnkranz als Innenzahnrad (62) ausgebildet ist, dessen Durchmesser größer als der des Innengewindes (54) ist.

7. Positionierantrieb nach einem der Ansprüche 2 bis 6, **dadurch gekennzeichnet, daß** die Elektromotoren (66) mit zur Hohlwellenachse parallelen Abtriebswellen (68) vorzugsweise in gleichen Umfangsabständen in einem grundkörperfesten Motorblock (56) angeordnet ist.

8. Positionierantrieb nach einem der Ansprüche 1 bis 7, **gekennzeichnet durch** einen Sensor (72) zur Drehzahl- und Drehrichtungsüberwachung der Hohlwelle (50).

9. Positionierantrieb nach Anspruch 8, **dadurch gekennzeichnet, daß** der Sensor (72) als zwischen der Hohlwelle (50) und einem grundkörperfesten Bauteil (56) angeordneter Inkrementalgeber ausgebildet ist.

10. Positionierantrieb nach einem der Ansprüche 8 oder 9, **dadurch gekennzeichnet, daß** der Sensor als an einem der Elektromotoren (66) angeordneter Encoder (72') ausgebildet ist.

11. Werkzeugkopf mit einem Positionierantrieb nach einem der Ansprüche 1 bis 10, **gekennzeichnet durch** einen stirnseitig am Grundkörper (10) lösbar angeordneten Wechselschneidkopf (84), der eine stirnseitige Zentralöffnung (86) und/oder eine Führungsbüchse (88) für den Durchtritt eines mit dem Schubglied (18) verbindbaren Reib- oder Bohrwerkzeugs (76) aufweist.

12. Werkzeugkopf mit einem Positionierantrieb nach einem der Ansprüche 1 bis 10, **dadurch gekennzeichnet, daß** das Schubglied (18) ein stirnseitiges, innerhalb des Grundkörpers (12) angeordnetes Kupplungselement (74,132) zur Aufnahme eines durch eine stimseitige Zentralöffnung (86) des Grundkörpers (12) oder des Wechselschneidkopfs (84) hindurchgreifenden, und in einen Hohlraum des Grundkörpers und/oder des Wechselschneidkopfs einziehbaren Reib- oder Bohrwerkzeugs (76) trägt.

13. Werkzeugkopf nach Anspruch 11 oder 12, **dadurch gekennzeichnet, daß** das Kupplungselement als Spannfutter (74), insbesondere als Spannzangenpinole ausgebildet ist.

14. Werkzeugkopf nach Anspruch 11 oder 12, **dadurch gekennzeichnet, daß** das Kupplungselement (132) ein Innengewinde (130) zur Aufnahme des ein komplementäres Außengewinde (134) tragenden Werkzeugschafts (76) aufweist.

15. Werkzeugkopf nach Anspruch 14, **dadurch gekennzeichnet, daß** das Kupplungselement mit Spiel in einem Kopfstück (138) des Schubglieds (18) dreh- und verschiebefest gelagert ist.

16. Werkzeugkopf nach Anspruch 15, **dadurch gekennzeichnet, daß** das Kupplungselement (132) eine im Umriß mehrkantige Mitnehmerpartie (140) und zwei an die Mitnehmerpartie nach entgegengesetzten Seiten anschließende Kugelkalotten (142) aufweist.

17. Werkzeugkopf nach einem der Ansprüche 11 bis 16, **dadurch gekennzeichnet, daß** mit dem Kupplungselement (74,132) eine Reibahle (76) zur Bearbeitung einer Stößelführungsbüchse (90) eines Zylinderkopfs verbindbar ist.

18. Werkzeugkopf nach einem der Ansprüche 11 bis 17, **dadurch gekennzeichnet, daß** der Wechselschneidkopf (84) eine winkelverstellbare Schneidplatte (96) zum Feindrehen eines zur Stößelführungsbüchse koaxialen Ventilsitzrings (92) trägt.

19. Werkzeugkopf nach Anspruch 18, **dadurch gekennzeichnet, daß** der Wechselschneidkopf (84) mindestens eine weitere Schneidplatte (98,100) zur Erzeugung einer den Ventilsitz begrenzenden Außenund/oder Innenfase trägt.

20. Werkzeugkopf mit einem Positionierantrieb nach einem der Ansprüche 1 bis 10, **gekennzeichnet durch** einen um eine zur Verschieberichtung (52) des Schubglieds (18) senkrechte Achse (102) drehbar am Grundkörper (12) gelagerten Schneidenträger (106) und **durch** die Schubbewegung des Schubglieds (18) in eine Drehbewegung des Schneidenträgers (106) umsetzende Getriebemittel (108).

21. Werkzeugkopf nach Anspruch 20, **dadurch gekennzeichnet, daß** der Schneidenträger (106), das Schubglied (18) und die Getriebemittel (108) eine Schubkurbel bilden.

22. Werkzeugkopf nach Anspruch 20 oder 21, **dadurch gekennzeichnet, daß** der Schneidenträger (106) mindestens eine als Kugeldrehschneide fungierende Schneidplatte (110) trägt.

23. Werkzeugkopf nach Anspruch 22, **dadurch gekennzeichnet, daß** der Schneidenträger (106) zwei einander diametral gegenüberliegende, als Kugeldrehschneiden fungierende Schneidplatten (110) trägt.

24. Werkzeugkopf mit einem Positionierantrieb nach einem der Ansprüche 1 bis 10, **gekennzeichnet durch** zwei quer oder schräg zur Verschieberichtung (52) des Schubglieds (18) am Grundkörper (12) gegensinnig verschiebbare Schieber (118), von denen mindestens einer eine Werkzeugaufnahme aufweist, und **durch** die Schubbewegung des Schubglieds (18) in die Verschiebebewegungen der Schieber (118) umsetzende Getriebemittel.

25. Werkzeugkopf nach Anspruch 24, **dadurch gekennzeichnet, daß** die Getriebemittel durch paarweise ineinander greifende schubgliedfeste und schieberfeste Schrägverzahnungen gebildet sind.

26. Werkzeugkopf nach einem der Ansprüche 11 bis 25, **dadurch gekennzeichnet, daß** die Stromversorgungseinrichtung (26) eine induktive Strom- und Datenübertragungsstrecke mit einer in einem maschinenseitigen Spulengehäuse (34) angeordneten Primärspule und einer in einem werkzeugkopfseitigen, den Werkzeugschaft (16) ringförmig umgreifenden Spulengehäuse (30) angeordneten Sekundärspule (32) aufweist, wobei die Spulengehäuse (30,34) bei mit der Maschinenspindel (14) gekuppeltem Werkzeugschaft (16) durch einen Luftspalt voneinander getrennt sind.

27. Werkzeugkopf nach Anspruch 26, **dadurch gekennzeichnet, daß** im maschinenseitigen und/oder werkzeugkopfseitigen Spulengehäuse (34,30) eine mit der Primär- bzw. Sekundärspule verbundene Primär- oder Sekundärelektronik zur Stromaufbereitung und/oder -stabilisierung angeordnet ist.

28. Werkzeugkopf nach Anspruch 26 oder 27, **dadurch gekennzeichnet, daß** das maschinenseitige Spulengehäuse (34) sich segmentartig nur über einen Teilumfang des Werkzeugschafts (16) erstreckt und den überwiegenden Teil des Schaftumfangs unter Bildung eines Freiraums für den Zugriff eines Werkzeuggreifers freiläßt.

29. Werkzeugkopf nach einem der Ansprüche 26 bis 28, **dadurch gekennzeichnet, daß** die Motoranordnung NC-gesteuert über die induktive Übertragungsstrecke (32, 34) ansteuerbar ist.

30. Werkzeugkopf nach einem der Ansprüche 26 bis 29, **dadurch gekennzeichnet, daß** die Spulengehäuse (30, 34) durch einen axialen Luftspalt voneinander getrennt sind.

## Claims

1. A position drive, in particular for use in machine tools, comprising at least one transmission element (18) which is movable with respect to a base body (12), the transmission element being provided especially for the displacement of a cutting tool (76, 106, 118) or of a cutting tip carrier, further comprising an electric motor arrangement (24) which is positioned on the base body (12) and is adapted to be coupled to the transmission element (18), and further comprising a power supply device (26) for the motor arrangement (24), wherein a shaft (50) is rotatably and axially non-displaceably borne in the base body (12), which hollow shaft (50) is driven by the motor arrangement (24) and coupled to the transmission element (18), and wherein the transmission element (18) is formed to be a thrust member (18) which is movable with respect to the base body in parallel to the shaft axis, **characterized in that** the shaft is formed to be a hollow shaft (50), and that the hollow shaft (50) is borne rotatable about an axis of the base body (12), which axis is concentric with respect to a displacement axis (52) of the thrust member (18), and that the hollow shaft (50) has an internal thread which engages in an external thread (42) of the thrust member (18).

2. The position drive of claim 1, **characterized in that** the motor arrangement (24) has at least two electric motors (66) which are positioned distributed over the circumference of the hollow shaft (50), the drive shafts of which each carry a gear (70) which meshes with a toothed ring (62) of the hollow shaft (50).

3. The position drive of claim 1 or 2, **characterized in that** the hollow shaft (50) has a toothed ring (62) which is positioned concentric with respect to the external thread (42), for the engagement of at least one gear (70) which is positioned on a driven shaft (68) of the motor arrangement (24).

4. The position drive of claim 2, **characterized in that** the electric motors (66) are preferably formed to be transmission motors and are adapted to be driven in unision, preferably by means of a NC-control unit.

5. The position drive of claim 4, **characterized in that** the electric motors (66) are formed to be stepper motors or servo motors.

6. The position drive of one of claims 2 to 5, **characterized in that** the toothed ring is formed to be an internal gear ring (62), the diameter of which is larger than that of the internal thread (54).

7. The position drive of one of claims 2 to 6, **characterized in that** the electric motors (66) are positioned in a base-body-fixed motor block (56) with their driven shafts (68) parallel to the axis of the hollow shaft, preferably at equal circumferential distances.

8. The position drive of one of claims 1 to 7, **characterized by** a sensor (72) for monitoring the speed and direction of rotation of the hollow shaft (50).

9. The position drive of claim 8, **characterized in that** the sensor (72) is formed to be an incremental transmitter which is positioned between the hollow shaft (50) and a base-body-fixed part (56).

10. The position drive of claim 8 or 9, **characterized in that** the sensor is formed to be an encoder (72') positioned on one of the electric motors (66).

11. A tool head having a position drive according to one of claims 1 to 10, **characterized by** an exchangeable cutting head (84) which is positioned removably at the front face of the base body (10) and which has central opening (86) and/or a guide bushing (88) at its front side for the insertion of a reaming or drilling tool (76) which is connectable to the thrust member (18).

12. A tool head having a position drive according to one of claims 1 to 10, **characterized in that** the thrust member (18) carries a coupling member (74, 132), which is positioned at the front side of and within the base body (12), for the insertion of a reaming or drilling tool (76) which extends through a central opening (86) at the front side of the base body (12) or of the exchangeable cutting head (84) and which is retractable into a hollow space of the base body or of the exchangeable cutting head.

13. The tool head of claim 11 or 12, **characterized in that** the coupling member is formed to be a clamping chuck (74), in particular a collet chuck sleeve.

14. The tool head of claim 11 or 12, **characterized in that** the coupling member (132) comprises an internal thread (130) for accepting the tool shaft (76) which has a matching external thread (134).

15. The tool head of claim 14, **characterized in that** the coupling element is borne with play in a head piece (138) of the thrust member (18) such that it cannot be rotated or displaced.

16. The tool head of claim 15, **characterized in that** the coupling element (132) comprises a multi-faceted driver portion (140) and two spherical domes (142) adjoining the driver portion at opposed sides.

17. The tool head of one of claims 11 to 16, **characterized in that** a reamer (76) for working on a tappet guide bushing (90) of a cylinder head is adapted to be connected to the coupling member (74, 132).

18. The tool head of one of claims 11 to 17, **characterized in that** the exchangeable cutting head (84) carries a cutting tip (96) having an adjustable work angle for precision turning of a valve seat ring (92) which is coaxial to the tappet guide bushing.

19. The tool head of claim 18, **characterized in that** the exchangeable cutting head (84) carries at least one further cutting tip (98, 100) for creating an inner and/or outer bevel delimiting the valve seat.

20. A tool head having a position drive according to one of claims 1 to 10, **characterized by** a cutting tip holder (106) which is borne on the base body (12) rotatable about an axis (102) which is perpendicular to the direction of displacement (52) of the thrust member (18), and by transmission means (108) which translate the thrust movement of the thrust member (18) into a rotary movement of the cutting tip holder (106).

21. The tool head of claim 20, **characterized in that** the cutting tip holder (106), the thrust member (18), and the transmission means (108) form a thrust crank.

22. The tool head of claim 20 or 21, **characterized in that** the cutting tip holder (106) carries at least one cutting tip (110) which functions as a ball turning tip.

23. The tool head of claim 22, **characterized in that** the cutting tip holder (106) carries two diametrically opposed cutting tips (110) which function as ball turning tips.

24. A tool head having a position drive according to one of claims 1 to 10, **characterized by** two sliders (118) which are displaceable on the base body (12) in opposite directions transverse or slanted with respect to the direction of displacement (52) of the thrust member (18), of which at least one slider has a tool reception, and by transmission means which translate the thrust movement of the thrust member (18) into a displacement movement of the slider (118).

25. The tool head of claim 24, **characterized in that** the transmission means are formed by helical gearings which mesh in pairs and are fixed to the thrust guide and to the slider.

26. The tool head of one of claims 11 to 25, **characterized in that** the power supply device (26) has an inductive current and data transfer path which has a primary coil positioned in a coil housing (34) at the machine side and a secondary coil (32) which is positioned at the tool head side in a coil housing (30) which surrounds the tool shank (16) in an annular manner, wherein the coil housings (30, 34) are separated from each other by an air gap when the tool shank (16) is coupled to the machine spindle (14).

27. The tool head of claim 26, **characterized in that** primary or secondary electronics for power conditioning and/or stabilization, which are connected to the primary and secondary coils, respectively, are positioned in the coil housing (34, 30) at the machine side and/or tool head side.

28. The tool head of claim 26 or 27, **characterized in that** the coil housing (34) on the machine side extends in a segment-like manner only over a portion of the circumference of the tool shaft (16) and leaves the major portion of the shaft circumference free for the access of a tool gripper.

29. The tool head of one of claims 26 to 28, **characterized in that** the motor arrangement is adapted to be NC-controlled by way of the inductive transfer path (32, 34).

30. The tool head of one of claims 26 to 29, **characterized in that** the coil housings (30, 34) are seperated from each other by an axial air gap.

## Revendications

1. Commande de positionnement, en particulier pour une utilisation sur des machines-outils, avec au moins un élément d'engrenages mobile (18) par rapport à un corps de base (12), en particulier pour déplacer un outil tranchant (76, 106, 118) ou un support de lame, avec un agencement de moteurs électriques (24) agencé dans le corps de base (12) et pouvant être couplé avec l'élément d'engrenages (18), et avec un dispositif d'alimentation électrique (26) pour l'agencement de moteurs (24), un arbre (50) pouvant être commandé par l'agencement de moteurs (24) et couplé avec l'élément d'engrenages (18) étant logé de façon rotative et axialement immobile dans le corps de base (12), et l'élément d'engrenages (18) étant réalisé comme un baladeur (18) mobile en parallèle à l'axe de l'arbre par rapport au corps de base, **caractérisée en ce que** l'arbre est réalisé comme un arbre creux (50) et **en ce que** l'arbre creux (50) est logé dans le corps de base (12) de façon à pouvoir tourner autour d'un axe de rotation concentrique par rapport à l'axe de déplacement (52) du baladeur (18) et présente un taraudage venant en prise avec un filetage (42) du baladeur (18).

2. Commande de positionnement selon la revendication 1, **caractérisée en ce que** l'agencement de moteurs (24) présente au moins deux moteurs électriques (66) agencés de façon répartie sur la circonférence de l'arbre creux (50) dont les arbres de transmission portent respectivement un pignon (70) en prise avec une couronne dentée (62) de l'arbre creux (50).

3. Commande de positionnement selon la revendication 1 ou 2, **caractérisée en ce que** l'arbre creux (50) présente une couronne dentée (62) concentrique par rapport au filetage (42) pour venir en prise avec au moins un pignon (70) agencé sur un arbre de transmission (68) de l'agencement de moteurs (24).

4. Commande de positionnement selon la revendication 2, **caractérisée en ce que** les moteurs électriques (66) réalisés de préférence comme des moto-réducteurs peuvent être commandés de préférence par l'intermédiaire d'une commande numérique.

5. Commande de positionnement selon la revendication 4, **caractérisée en ce que** les moteurs électriques (66) sont réalisés comme des moteurs pas-à-pas ou des servomoteurs.

6. Commande de positionnement selon l'une quelconque des revendications 2 à 5, **caractérisée en ce que** la couronne dentée est réalisée comme un pignon intérieur (62) dont le diamètre est supérieur à celui du taraudage (54).

7. Commande de positionnement selon l'une quelconque des revendications 2 à 6, **caractérisée en ce que** les moteurs électriques (66) sont agencés avec des arbres de transmission (68) parallèles à l'axe de l'arbre creux de préférence à des distances circonférentielles identiques dans un bloc-moteur (56) fixé au corps de base.

8. Commande de positionnement selon l'une quelconque des revendications 1 à 7, **caractérisé par** un capteur (72) pour surveiller la vitesse de rotation et le sens de rotation de l'arbre creux (50).

9. Commande de positionnement selon la revendication 8, **caractérisée en ce que** le capteur (72) est réalisé comme un transmetteur incrémentiel agencé entre l'arbre creux (50) et un composant (56) fixé au corps de base.

10. Commande de positionnement selon l'une quelconque des revendications 8 ou 9, **caractérisée en ce que** le capteur est réalisé comme un codeur (72') agencé sur l'un des moteurs électriques (66).

11. Tête porte-outil avec une commande de positionnement selon l'une quelconque des revendications 1 à 10, **caractérisée par** une tête porte-fraise de rechange (84) agencée de façon détachable sur la surface extérieure du corps de base (10), la tête présentant un orifice central frontal (86) et/ou une douille de guidage (88) pour le passage d'un outil à râper ou à aléser (76) pouvant être relié au baladeur (18).

12. Tête porte-outil avec une commande de positionnement selon l'une quelconque des revendications 1 à 10, **caractérisée en ce que** le baladeur (18) porte un élément de couplage (74, 132) agencé sur la surface extérieure, à l'intérieur du corps de base (12) pour recevoir un outil à râper ou à aléser (76) traversant un orifice central frontal (86) du corps de base (12) ou de la tête porte-fraise de rechange (84) et rétractable dans un évidement du corps de base et/ou de la tête porte-fraise de rechange.

13. Tête porte-outil selon la revendication 11 ou 12, **caractérisée en ce que** l'élément de couplage est réalisé comme un mandrin de serrage (74), en particulier comme un mandrin de pince de serrage.

14. Tête porte-outil selon la revendication 11 ou 12, **caractérisée en ce que** l'élément de couplage (132) présente un taraudage (130) pour recevoir la tige porte-outil (76) portant un filetage (134) complémentaire.

15. Tête porte-outil selon la revendication 14, **caractérisée en ce que** l'élément de couplage est logé de façon verrouillée en rotation et déplacement avec un certain jeu dans une pièce de tête (138) du baladeur (18).

16. Tête porte-outil selon la revendication 15, **caractérisée en ce que** l'élément de couplage (132) présente une partie d'entraînement (140) de contour polygonal et deux calottes sphériques (142) adjacentes à la partie d'entraînement sur des côtés opposés.

17. Tête porte-outil selon l'une quelconque des revendications 11 à 16, **caractérisée en ce qu'**un alésoir (76) pour usiner une douille de guidage de poussoir (90) d'une tête de cylindre peut être relié à l'élément de couplage (74, 132).

18. Tête porte-outil selon l'une quelconque des revendications 11 à 17, **caractérisée en ce que** la tête porte-fraise de rechange (84) porte une matrice d'ébavurage (96) à ajustage angulaire pour le tournage de précision d'un siège rapporté de soupape (92) coaxial par rapport à la douille de guidage de poussoir.

19. Tête porte-outil selon la revendication 18, **caractérisée en ce que** la tête porte-fraise de rechange (84) porte au moins une autre matrice d'ébavurage (98, 100) pour créer une face de dépouille extérieure et/ou intérieure délimitant le siège de soupape.

20. Tête porte-outil avec une commande de positionnement selon l'une quelconque des revendications 1 à 10, **caractérisée par** un support de lame (106) logé au niveau du corps de base (12) de façon à pouvoir tourner autour d'un axe (102) perpendiculaire à la direction de déplacement (52) du baladeur (18) et par des moyens d'engrenages (108) convertissant le mouvement de translation du baladeur (18) en un mouvement de rotation du support de lame (106).

21. Tête porte-outil selon la revendication 20, **caractérisée en ce que** le support de lame (106), le baladeur (18) et les moyens d'engrenages (108) forment une manivelle de poussée.

22. Tête porte-outil selon la revendication 20 ou 21, **caractérisée en ce que** le support de lame (106) porte au moins une matrice d'ébavurage (110) servant de lame à tourner des sphères.

23. Tête porte-outil selon la revendication 22, **caractérisée en ce que** le support de lame (106) porte deux matrices d'ébavurage (110) diamétralement opposées l'une à l'autre et servant de lames à tourner des sphères.

24. Tête porte-outil avec une commande de positionnement selon l'une quelconque des revendications 1 à 10, **caractérisée par** deux coulisses (118) mobiles en sens inverse au niveau du corps de base (12) de façon transversale ou diagonale à la direction de déplacement (52) du baladeur (18), dont au moins l'une présente un raccord d'outil, et par des moyens d'engrenages convertissant le mouvement de translation du baladeur (18) en mouvements de déplacement des coulisses (118).

25. Tête porte-outil selon la revendication 24, **caractérisée en ce que** les moyens d'engrenages sont formés par des dentures hélicoïdales fixées au baladeur et fixées aux coulisses et venant en prise mutuellement par paires.

26. Tête porte-outil selon l'une quelconque des revendications 11 à 25, **caractérisée en ce que** le dispositif d'alimentation électrique (26) présente une voie de transmission de courant et de données inductive avec une bobine primaire agencée dans une carcasse de bobine (34) côté machine et une bobine secondaire (32) agencée dans une carcasse de bobine (30) entourant de façon annulaire la tige porte-outil (16), les carcasses de bobine (30, 34) étant séparées l'une de l'autre par un entrefer lorsque la broche de machine (14) est couplée avec la tige porte-outil (16).

27. Tête porte-outil selon la revendication 26, **caractérisée en ce que** dans la carcasse de bobine (34, 30) côté machine et/ou côté tête porte-outil, une électronique primaire ou secondaire reliée à la bobine primaire ou secondaire est agencée pour le traitement et/ou la stabilisation du courant.

28. Tête porte-outil selon la revendication 26 ou 27, **caractérisée en ce que** la carcasse de bobine (34) côté machine s'étend comme un segment uniquement sur une circonférence partielle de la tige porte-outil (16) et laisse la plus grande partie de la circonférence de tige libre en créant un espace libre pour l'accès d'un preneur d'outil.

29. Tête porte-outil selon l'une quelconque des revendications 26 à 28, **caractérisée en ce que** l'agencement de moteurs peut être commandé par une commande numérique par l'intermédiaire de la voie de transmission inductive (32, 34).

30. Tête porte-outil selon l'une quelconque des revendications 26 à 29, **caractérisée en ce que** les carcasses de bobine (30, 34) sont séparées l'une de l'autre par un entrefer axial.
